# EUROPEAN PATENT SPECIFICATION

(11) **EP 1 306 391 B1**
(45) Date of publication and mention of the grant of the patent: **30.04.2008**
(21) Application number: 01204069.7
(22) Date of filing: 26.10.2001
(51) Int. Cl.: C08F 4/658, C08F 10/00

(54) **Ziegler-Natta catalyst for tuning MWD of polyolefin, method of making, method of using and polyolefins made therewith**
Ziegler-Natta Katalysator zur Regulierung der MWD von Polyolefinen, Verfahren zur Herstellung, Verwendung und damit hergestellte Polyolefine
Catalyseur Ziegler-Natta pour le réglage de la MWD de polyoléfines, méthode de préparation, utlisation et polyoléfines obtenues avec celui-ci

(43) Date of publication of application: 02.05.2003
(73) Proprietor: TOTAL PETROCHEMICALS RESEARCH FELUY, 7181 Seneffe (Feluy) (BE)
(72) Inventor: Gray, Steven D., League City, Texas 77573 (US); Coffy, Tim J., Houston, Texas 77062 (US)
(74) Representative: Leyder, Francis

(56) References cited:
- EP-A- 0 855 409
- US-A- 4 719 193

## Description

### REFERENCE TO RELATED APPLICATION

The present application is a Continuation-in-part of U.S. Patent Application serial number 08/789,862, entitled, "Ziegler-Natta Catalysts for Olefin Polymerization," filed January 28, 1997.

### BACKGROUND OF THE INVENTION

### 1. Field of the Invention

The present invention relates to catalysts, to methods of making catalysts, to methods of using catalysts and to methods of polymerizing with such catalysts. In another aspect, the present invention relates to polyolefin catalysts, to methods of making such catalysts, to methods of using such catalysts and to polyolefin polymerization. In even another aspect, the present invention relates to Ziegler-Natta catalysts, to methods of making such catalysts, to methods of using such catalysts and to polyolefin polymerization.

### 2. Description of the Related Art

Having been around since the early 1950's, Ziegler-type polyolefin catalysts, their general methods of making, and subsequent use, are well known in the polymerization art.

However, while much is known about Ziegler-type catalysts, there is a constant search for improvements in their polymer yield, catalyst life, catalyst activity, and in their ability to produce polyolefins having certain properties.

U.S. Patent No. 4,255,544, issued March 10, 1981 to Kimura et al., discloses a process for polymerization of ethylene utilizing a catalyst comprising (A) the reaction product of a magnesium compound and titanium halide, and (B) an organic aluminum compound, wherein component A is prepared by reacting magnesium dialkoxide with a hologen-containing silicon compound and an alcohol to provide a solid material and then reacting the solid material with titanium halide in the presence of an alkoxy-containing silicon compound.

U.S. Patent No. 4,914,069, issued April 3, 1990 to Job et al., discloses the preparation of an olefin polymerization catalyst component having improved activity and selectivity, which are prepared by (a) halogenating a magnesium compound containing at least one aryloxy, alkyl or carbonate or alkloxy group with a first halide of tetravalent titanium and a first electron donor; (b) contacting the resulting product with a second halide of tetravalent titanium; and (c) washing a resulting treated halogenated product with an inert hydrocarbon liquid. In the process, a second electron donor is used in step (a) or (b), and that the product of step (b) is contacted in a step (b2) with a third halide of tetravalent titanium at a temperature of 40°C to 140°C and thereafter the treated product is washed in step (c).

U.S. Patent No. 5,155,187, issued October 13, 1992 to Shelly, discloses a polymerization method utilizing a catalyst which is the reaction product generally of a silicon-containing compound, a magnesiumdialkyl, an alcohol, a halide-containing metal compound, an aluminum alkoxide, and a second halide-containing metal compound.

U.S. Patent No. 5,610,246, issued March 11, 1997 to Buehler et al., discloses a process for polymerizing propylene using a silica-supported catalyst. The catalyst comprises the product obtained by contacting silica, in random order, with (1) at least one hydrocarbon soluble magnesium-containing compound; and (2) a first modifying compound selected from the group consisting of silicon halides, boron halides, aluminum halides and mixtures thereof followed by a second specified modifying compound.

U.S. Patent No. 5,631,334, issued May 20, 1997 to Zandona, disclose a process for the manufacture of a catalytic solid for the (co)polymerization of at least one olefin, comprising the coprecipitate magnesium and of at least one transition metal.

EP 0 855 409 relates to the synthesis of a Ziegler-Natta catalyst using a multi-step preparation which includes treating a soluble magnesium compound with successively stronger chlorination/titanation reagents heat treatment can eventually take place before preactivation of the catalyst. The catalyst may be used in polymerization of olefins, particularly ethylene, to produce a polymer with less fines, larger average fluff particle size and narrow molecular weight distribution. The catalyst has high activity and good hydrogen response.

However, in spite of these advancements in the prior art, none of these prior art references disclose or suggest a heat treatment of a preactivated polyolefin catalyst.

Furthermore, none of these prior art references disclose or suggest that heat treatment of a preactivated polyolefin catalyst will provide any effect on the polymer molecular weight distribution ("MWD").

Thus, there is a need in the art for a polyolefin catalyst.

There is another need in the art for a method of making a polyolefin catalyst.

There is even another need in the art for a method of polymerizing olefins.

There is yet another need in the art for a polyolefin catalyst allowing for production of polyolefins of various MWD, with a catalyst that also has high activity and excellent fluff morphology.

There is even yet another need in the art for a method of using a heat treated preactivated polyolefin catalyst to effect polyolefin MWD.

These and other needs in the art will become apparent to those of skill in the art upon review of this specification, including its drawings and claims.

### SUMMARY OF THE INVENTION

It is an object of the present invention to provide for a polyolefin catalyst.

It is another object of the present invention to provide for a method of making a polyolefin catalyst.

It is even another object of the present invention to provide for a method of polymerizing olefins.

It is yet another object of the present invention to provide for a polyolefin catalyst allowing for production of polyolefins of various MWD, with a catalyst that also has high activity and excellent fluff morphology.

It is even yet another object of the present invention to provide for a method of using a heat treated preactivated polyolefin catalyst to affect polyolefin MWD.

According to one embodiment of the present invention there is provided a polyolefin catalyst. The catalyst is produced by a method comprising the steps of: a) synthesizing a soluble magnesium dialkoxide of the general formula Mg(OR'')₂ as a product of a reaction comprising a magnesium dialkyl of the general formula MgRR'and an alcohol of the general formula R''OH, where R, R' and R' ' are each a hydrocarbyl or substituted hydrocarbyl having from 1 to 20 carbon atoms, and wherein any two or more of R, R' and R'' may be the same or different; b) contacting the magnesium dialkoxide compound with a mild halogenating agent capable of exchanging one halogen for one alkoxide to form a reaction product "A"; c) contacting reaction product "A" with a first halogenating/titanating agent to form reaction product "B"; d) contacting reaction product "B" with a second stronger halogenating/titanating agent to form reaction product "C"; e) contacting reaction product "C" with an organoaluminum preactivating agent to form a preactivated catalyst; and f) heating the preactivated catalyst. The preactivated catalyst is heated in step f) at a temperature in the range of 90°C to 150°C, for a time in the range of thirty minutes to a twenty-four hours.

Even another embodiment of the invention provides a catalyst system comprising a polyolefin catalyst of the invention, and an inert support. Generally the inert support is a magnesium compound.

Still another embodiment of the invention provides a process for making a catalyst. Generally, the process comprises the steps of: a) synthesizing a soluble magnesium dialkoxide of the general formula Mg(OR'')₂ as a product of a reaction comprising a magnesium dialkyl of the general formula MgRR'and an alcohol of the general formula R''OH, where R, R' and R" are each a hydrocarbyl or substituted hydrocarbyl having from 1 to 20 carbon atoms, and wherein any two or more of R, R' and R'' may be the same or different; b) contacting the magnesium dialkoxide compound with a mild halogenating agent capable of exchanging one halogen for one alkoxide to form a reaction product "A"; c) contacting reaction product "A" with a first halogenating/titanating agent to form reaction product "B"; d) contacting reaction product "B" with a second stronger halogenating/titanating agent to form reaction product "C"; e) contacting reaction product "C" with an organoaluminum preactivating agent to form a preactivated catalyst; and f) heating the preactivated catalyst. The preactivated catalyst is heated in step f) at a temperature in the range of 90°C to 150°C, for a time in the range of thirty minutes to a twenty-four hours.

Yet another embodiment of the invention provides a process for α-olefin polymerization. Generally the process comprises the steps of: a) contacting one or more α-olefin monomers together in the presence of a catalyst under polymerization conditions; and b) extracting polyolefin polymer. Preferably, the monomers are ethylene monomers and the polymer is polyethylene. The catalyst utilized in this process is produced by the steps of (i) synthesizing a magnesium dialkoxide of the general formula Mg(OR'')₂ from a magnesium dialkyl of the general formula MgRR'and an alcohol of the general formula R"OH, where R, R' and R'' are each a hydrocarbyl or substituted hydrocarbyl having from 1 to 20 carbon atoms, and wherein any two or more of R, R' and R'' may be the same or different; (ii) contacting the magnesium dialkoxide compound with a mild halogenating agent capable of exchanging one halogen for one alkoxide to form a reaction product "A"; (iii) contacting reaction product "A" with a first halogenating/titanating agent to form reaction product "B"; (iv) contacting reaction product "B" with a second stronger halogenating/titanating agent to form reaction product "C"; (v) contacting reaction product "C" with an organoaluminum preactivating agent to form a preactivated catalyst; and (vi) heating the preactivated catalyst.

These objects of the present invention will become apparent to those of skill in the art upon review of this specification, including its drawings and claims.

### BRIEF DESCRIPTION OF THE DRAWINGS

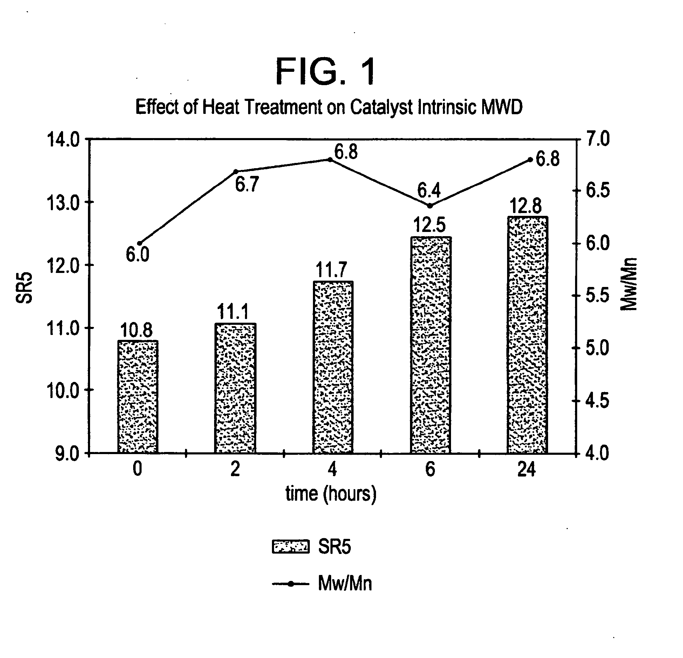

FIG. 1 is a bar graph showing the effect of heat treatment on catalyst intrinsic MWD.

### DETAILED DESCRIPTION OF THE INVENTION

The method of the present invention for making a catalyst component generally includes the steps of forming a metal dialkoxide from a metal dialkyl and an alcohol, halogenating the metal dialkoxide, halogenating/titanating in one or more steps to form a catalyst component, treating the catalyst component with a preactivation agent such as an organoaluminum to form a preactivated catalyst, and heat treating the preactived catalyst.

A proposed mechanism for the method of the present invention is generally as follows:
1. MRR' + 2R'OH → M(OR'')₂;
2. M(OR'')₂ + ClAR'''ₓ → "A";
3. "A" + TiCl₄/Ti (OR'''')₄ → "B";
4. "B" + TiCl₄ → "C" (catalyst component);
5. "C" + TEAl → preactivated catalyst; and
6. Heat treatment of the preactivated catalyst.

In the above formulas, M may be any suitable metal, preferably a Group IIA, most preferably Mg. In the above formulas, R, R', R'', R''', and R'''' are each independently hydrocarbyl or substituted hydrocarbyl moieties, with R and R' having from 1 to 20 carbon atoms, preferably from 1 to 10 carbon atoms, more preferably from 2 to 6 carbon atoms, and even more preferably, from 2 to 4 carbon atoms. R'' generally comprises from 3 to 20 carbon atoms, R''' generally comprises from 2-6 carbon atoms, and R'''' generally comprises from 2-6 carbon atoms and is generally butyl. Any combination of two or more of R, R', R'', R''', and R'''' may be the same, or the R groups may be different.

In the above formula ClAR'''ₓ, A is preferably a nonreducing oxyphilic compound which is capable of exchanging one chloride of an alkoxide, R''' is preferably an alkyl, and x is the valence of A minus 1. Examples of A include titanium, silicon, aluminum, carbon, tin and germanium, most preferred of which is titanium, wherein x is 3. Examples of R''' include methyl, ethyl, propyl, isopropyl and the like having 2-6 carbon atoms.

While the exact composition of product "A" is unknown, it is believed that it contains a partially chlorinated metal compound, one example of which may be ClMg(OR''). The first halogenation/titanation step produces product "B" which is probably a complex of chlorinated and partially chlorinated metal and titanium compounds and for example, may possibly be represented by (MCl₂)_{y'}.(TiClₓ(OR)₄₋ₓ)_{z'}. The second chlorination/titanation produces product "C" which is also probably a complex of chlorinated and partially chlorinated metal and titanium compounds but different from product "B" and may possibly be represented by (MCl₂)_{y}. (TiClₓ, (OR)_{4-x'})_{z'}. It is expected that the level of chlorination of "product C" would be greater than that of product "B". This greater level of chlorination would produce a different complex of different compounds. While this description of the reaction products offers the most probable explanation of the chemistry at this time, the invention as described in the claims is not limited by this theoretical mechanism.

Metal dialkyls and resultant metal dialkoxides suitable for use in the present invention include any that when utilized in the present invention will yield a suitable polyolefin catalyst. Preferred metal dialkoxides and dialkyls include Group IIA metal dialkoxides and dialkyls. More preferably the metal dialkoxide or dialkyl is a magnesium dialkoxide or dialkyl.

In the practice of the present invention, the magnesium dialkyl [MgRR'] may be any magnesium dialkyl where R and R' are as described above. Of course, R and R' may be the same or different. Non-limiting examples of suitable magnesium dialkyls include diethyl magnesium, dipropyl magnesium, dibutyl magnesium and butylethylmagnesium, etc. Butylethylmagnesium (BEM) is the preferred magnesium dialkyl.

In the practice of the present invention, the metal dialkoxide is preferably a magnesium compound of the general formula Mg(OR'')₂, where R'' is a hydrocarbyl or substituted hydrocarbyl of 1 to 20 carbon atoms. The magnesium dialkoxide compound is a reaction product of a reaction of a magnesium compound of the general formula MgRR', wherein R and R' are alkyl groups of 1-10 carbon atoms and may be the same or different, and an alcohol of the general formula R''OH wherein the alcohol is linear or branched and wherein R" is an alkyl group of 4-20 carbon atoms.

The metal dialkoxide is most preferably soluble and non-reducing. A non-reducing compound has the advantage of forming MgCl₂ instead of insoluble Ti⁺³ species formed by reduction of compounds such as MgRR' which tend to form catalysts having a broad particle size distribution.

In addition, Mg(OR'')₂ is less reactive than MgRR' and the chlorination with a mild chlorinating agent, followed by a simultaneous chlorination/titanation with a mild reagent and a second chlorination/titanation with a stronger reagent are gradual and successively stronger reactions which may result in more uniform product, i.e., larger catalyst particles and a more uniform catalyst particle size distribution.

Non-limiting examples of preferred species of metal dialkoxides which are useful include magnesium butoxide, magnesium pentoxide, magnesium hexoxodie, magnesium di(2-ethylhexoxide), and any alkoxide suitable for making the system soluble. The most preferred metal alkoxide species is magnesium di(2-ethylhexoxide).

As a non-limiting example, a magnesium dialkoxide, such as magnesium di(2-ethylhexoxide), may be produced by reacting an alkyl magnesium compound (MgRR'), such as butyl ethyl magnesium (BEM), with an alcohol (ROH), such as 2-ethylhexanol, illustrated by the following formula:.

MgRR' + 2 R''OH → Mg (OR'')₂ + RH + R'H.

In the case of BEM, RH and R'H are butane and ethane, respectively. The reaction takes place at room temperature and the reactants form a solution. Any two or more of the R groups may be the same, or the R groups may all be different from one another.

In the practice of the present invention, any alcohol yielding the desired metal dialkoxide may be utilized. As a non-limiting example, the alcohol may be any alcohol of the general formula R''OH where R" is an alkyl group of 4-20 carbon atoms. The alcohol may be linear or branched. Non-limiting examples of the alcohol include ethanol, propanol, isopropanol, butanol, isobutanol and 2-ethylhexanol. The preferred alcohol is 2-ethylhexanol.

Generally the amount of alcohol added will be in the range of about 0.5 equivalents to about 4 equivalents (equivalents are relative to the magnesium or metal compound throughout), preferably in the range of about 1 to about 3 equivalents. While it is believed that almost any alcohol may be utilized, it is preferred that a higher order branched alcohol, for example, 2-ethyl-1-hexanol, be utilized. Generally, the alcohol utilized will have at least 3, preferably at least 4, more preferably at least 5, and most preferably at least 6 carbon atoms.

Alkyl metal compounds are highly associative due to electron-deficient bonding which results in a high molecular weight species which is very viscous in solution. This high viscosity may be reduced by the addition of an aluminum alkyl, such as triethylaluminum, which disrupts the association between the individual alkyl metal molecules. The preferred ratio of alkyl aluminum to metal is 0.001:1 to 1:1, more preferably 0.01 to 0.1:1 and most preferably 0.03:1 to 0.05:1. In addition, an electron donor such as an ether, e.g. diisoamyl ether (DIAE) may be used to further reduce the viscosity of the alkyl metal. The preferred ratio of electron donor to metal is in the range of 0:1 to 10:1 and more preferably is in the range of 0.1:1 to 1:1.

Agents useful in the halogenating step for halogenating the metal alkoxide include any halogenating agent which when utilized in the present invention will yield a suitable polyolefin catalyst. Preferably the halogenating step is a chlorinating step and the preferred halogenating agent is a chloride.

The preferred chloride halogenating agent ("chlorinating agent") is preferably a monochloride compound which only partially chlorinates the magnesium alkoxide. The preferred chlorinating agent is of the general formula ClAR'''ₓ or ClAOR'''ₓ, where A is a nonreducing oxyphilic compound which is capable of exchanging one chloride for an alkoxide, R''' is alkyl and x is the valence of A minus 1. Examples of A are titanium, silicon, aluminum, carbon, tin and germanium, most preferred of which is titanium and silicon wherein x is 3. Examples of R''' are methyl, ethyl, propyl, isopropyl and the like having 2-6 carbon atoms. Examples of a chlorinating agent effective in the present invention are ClTi(OⁱPr)₃ and ClSi(Me)₃. When ClTi(OⁱPr)₃ is used, the ratio of titanium to magnesium is between 0,5 and 5.0.

The halogenating of the metal alkoxide compound is generally conducted in a hydrocarbon solvent under an inert atmosphere. Non-limiting examples of suitable solvents include toluene, heptane, hexane, octane and the like. The preferred solvent is hexane.

In this halogenating step, the mole ratio of metal alkoxide to halogenating agent is generally in the range of 6:1 to 1:3, preferably in the range of 3:1 to 1:2, more preferably in the range of 2:1 to 1:2, and even most preferably in the range of about 1:1.

The halogenating step is generally carried out at a temperature in the range of 0°C to 100°C, and for a reaction time in the range of 0.5 to 24 hours. Preferably, the halogenating step is carried out at a temperature in the range of 20°C to 90°C, and for a reaction time in the range of 1 hour to 4 hours.

Once the halogenating step is carried out and the metal dialkoxide is halogenated, product "A" is subjected to one or more halogenation/titanation treatments.

In the one or more halogenating/titanating steps, the halogenating/titanating agent is preferably a tetrasubstituted titanium compound with all four substituents being the same and the substituents being a halide or an alkoxide or phenoxide with 2 to 10 carbon atoms, such as TiCl₄ or Ti(OR)₄. The halogenating/titanation agent is preferably a chlorination/titanation agent.

The preferred chlorinating/titanating agent may be a single compound or a combination of compounds. The method of the present invention provides an active catalyst after the first chlorination/titanation step; however, chlorination/titanation is preferably carried out at least twice using a different compound or combination of compounds at each of the steps, and involves use of a stronger chlorination/titanation with each successive chlorination/titanation step.

The first chlorination/titanation agent is preferably a mild titanation agent, such as, for example. a blend of a titanium halide and a organic titanate. More preferably, the first chlorinating/titanating agent is a blend of TiCl₄ and Ti(OBu)₄ in a range from about 0.5:1 to 6:1 TiCl₄/TiOBu)₄, most preferably in a range from about 2:1 to 3:1. It is believed that the blend of titanium halide and organic titanate react to form a titanium alkoxyhalide, Ti(OR)ₐX_{b}, where OR and X are an alkoxide and halide, respectively, a + b is the valence of titanium which is typically 4 and both a and b may be fractional, e.g. a=2.5 and b=1.5.

In the alternative, the first chlorination/titanation agent may be a single compound. Examples of the first chlorination/titanation agent as a single compound are Ti(OC₂H₅)₃Cl, Ti(OC₂H₅)₃Cl, Ti(OC₃H₇)₂Cl₂, Ti(OC₃H₇)₃Cl, Ti(OC₄H₉)Cl₃, Ti (OC₆H₁₃)₂Cl₂, Ti (OC₂H₅)₂Br₂, and Ti (OC₁₂H₅)Cl₃.

The first halogenation/titanation step is generally carried out in a hydrocarbon solvent. Nonlimiting examples of suitable hydrocarbon solvents include heptane, hexane, toluene and octane and the like. The preferred solvent is hexane.

A solid product "B" is precipitated at room temperature following the addition of a first halogenation/titanium agent to the soluble product "A".

The amount of halogenation/titanium agent utilized must be sufficient to precipitate a solid product from the solution. In general, the amount of halogenation/titanium agent utilized, based on the ratio of titanium to metal, will generally be in the range of 0.5 to 5, preferably in the range of 1 to 4, and most preferably in the range 1.5 to 2.5.

The solid product "B" precipitated in this first titanation step is then recovered by any suitable recovery technique, and washed with a hydrocarbon solvent.

Compounds suitable for use as the second halogenation/titanation agent include those suitable for use as the first halogenation/titanation agent, except that preferably, the second agent is a stronger agent. The second stronger halogenating/titanating agent is preferably a titanium halide, more preferably titanium tetrachloride [TiCl₄].

The second halogenation/titanation step is generally carried out by slurrying the solid product "B" in a hydrocarbon solvent to produce reaction product, or catalyst component, "C". Hydrocarbon solvents listed as suitable for the first halogenation/titanation step may be utilized. In general, the amount of titanium tetrachloride utilized will generally be in the range of about 0.1 to about 5 equivalents, preferably in the range of about 0.15 to about 4 equivalents, most preferably in the range of 0.175 to 2.5.

The catalyst component "C" may be combined with an organoaluminum cocatalyst component (a "preactivating agent") to form a preactivated catalyst suitable for the polymerization of olefins. Typically, the cocatalysts which are used together with the transition metal containing catalyst component "C" are organometallic compounds of Group Ia, IIa, and IIIa metals such as aluminum alkyls, aluminum alkyl hydrides, lithium aluminum alkyls, zinc alkyls and magnesium alkyls.

The preactivating agent is preferably an organoaluminum compound. The organoaluminum preactivating agent is preferably an aluminum alkyl of the formula AlR^₃ where R^ is an alkyl having 1-8 carbon atoms or a halide, R' being the same or different and at least one R is an alkyl. The organoaluminum preactivating agent is more preferably a trialkyl aluminum, such as trimethyl aluminum (TMA), triethyl aluminum (TEA1) and triisobutyl aluminum (TiBAl). The most preferred preactivating agent is TEA1. The ratio of Al to titanium is in the range from 0.01:1 to 2:1 and preferably is 0.25:1 to 1.2:1.

The preactivated catalyst is then subjected to heat treating with a temperature in the range of 90°C to 150°C, preferably to a temperature in the range of 100°C to 125°C. The slurry is held at this elevated temperature for a holding period in the range of 0.5 hours to 24 hours, preferably for a holding period in the range of 1 hour to 4 hours. Subsequently, the final solid catalyst is recovered and washed with a hydrocarbon solvent.

Optionally, an electron donor may be added with the halogenation agent, the first mild halogenation/titanation agent, the second stronger halogenation/titanation agent, the organoaluminium preactivating agent or during the heating of the preactivated catalyst and wherein the ratio of electron donor to magnesium is in the range of 0:1 to 10:1. Most preferably, an electron donor is utilized in the second halogenation/titanation step.

Electron donors for use in the preparation of polyolefin catalysts are well known, and any suitable electron donor may be utilized in the present invention which will provide a suitable catalyst.

Electron donors, also known as Lewis bases, are organic compounds of oxygen, nitrogen, phosphorous, or sulfur which can donate an electron pair to the catalyst.

The electron donor may be a monofunctional or polyfunctional compound, advantangeously selected from among the aliphatic or aromatic carboxylic acids and their alkyl esters, the aliphatic or cyclic ethers, ketones, vinyl esters, acryl derivatives, particularly alkyl acrylates or methacrylates and silanes. A preferred example of a suitable electron donor is di-n-butyl phthalate. A more preferred example of a suitable electron donor is an alkylsilylalkoxide of the general formula RSi(OR')₃, e.g., methylsilyltriethoxide [MeSi(OEt₃)], where R and R' are alkyls with 1-5 carbon atoms and may be the same or different.

The support of the catalyst system of the present invention should be an inert solid which is chemically unreactive with any of the components of the conventional Ziegler-Natta catalyst. The support is preferably a magnesium compound. Examples of the magnesium compounds which are to be used to provide a support for the catalyst component are magnesium halides, dialkoxymagnesiums, alkoxymagnesium halides and carboxylates of magnesium. The preferred magnesium compound is a magnesium chloride (MgCl₂).

Optionally, the Ziegler-Natta catalyst may be prepolymerized. Generally, a prepolymerization process is effected by contacting a small amount of monomer with the catalyst after the catalyst has been contacted with the co-catalyst. A pre-polymerization process is described in U.S. Patent Nos. 5,106,804; 5,153,158; and 5,594,071.

The catalyst may be used in any known process for the homopolymerization or copolymerization of any type of α-olefins. For example, the present catalyst is useful for catalyzing ethylene, propylene, butylene, pentene, hexene, 4-methylpentene and other α-alkenes having at least 2 carbon atoms, and also for mixtures thereof. Preferably, the catalysts of the present invention are utilized for the polymerization of ethylene to produce polyethylene.

The resulting catalyst of the present invention has very high activity which is at least partially dependent upon the olefin polymerization conditions. Generally, the activity of the catalyst is at least 6,000 gPE/g catalyst, but may also be greater than 100,000 gPE/g catalyst.

Additionally, the resulting catalyst of the present invention provides a polymer with excellent fluff morphology. Thus, the catalyst of the present invention provides for large polymer particles with a uniform distribution of sizes, wherein small, extremely fine particles (less than about 125 microns) are only present in low concentrations. The catalysts of the present invention, which include large, readily transferred powders with high powder bulk densities, are amenable to polymerization production processes.

The polymerization process may be bulk, slurry or gas phase. It is preferred to use the catalyst of the present invention in a slurry phase polymerization. The polymerization conditions (e.g., temperature and pressure) are dependent upon the type of equipment utilized, as well as the type of polymerization process utilized, and are known in the art. For example, the temperature may be in the range of 50-200°C, and the pressure may be in a range of 6,9.10⁴ - 5,5.10⁶ Pa (10-800 psi.)

The olefin monomer may be introduced into the polymerization reaction zone in a diluent which is a nonreactive heat transfer agent which is liquid at the reaction conditions. Examples of such a diluent are hexane and isobutane. For the copolymerization of ethylene with another alpha-olefin, such as, for example, butene or hexene, the second alpha-olefin may be present at 0.01-20 mole percent, preferably 0.02-10 mole percent.

For the polymerization process, it may be preferred to include an internal electron donor in the synthesis of the catalyst and an external electron donor or stereoselectivity control agent (SCA) to activate the catalyst at polymerization. An internal electron donor may be used in the formation reaction of the catalyst during the chlorination or chlorination/titanation steps. Compounds suitable as internal electron-donors for preparing conventional supported Ziegler-Natta catalyst components include ethers, diethers, ketones, lactones, electron donors compounds with N, P and/or S atoms and specific classes of esters. Particularly suitable are the esters of phthalic acid, such as diisobutyl, dioctyl, diphenyl and benzylbutylphthalate; esters of malonic acid, such as diisobutyl and diethylmalonate; alkyl and arylpivalates; alkyl, cycloalkyl and arylmaleates; alkyl and aryl carbonates such as diisobutyl, ethyl-phenyl and diphenylcarbonate; succinic acid esters, such as mono and diethyl succinate.

External donors which may be utilized in the preparation of a catalyst according to the present invention include organosilane compounds such as alkoxysilanes of general formula SiRₘ(OR')₄₋ₘ where R is selected from the group consisting of an alkyl group, a cycloalkyl group, an aryl group and a vinyl group; R' is an alkyl group; and m is 0-3, wherein R may be identical with R'; when m is 0, 1 or 2, the R' groups may be identical or different; and when m is 2 or 3, the R groups may be identical or different.

Preferably, the external donor of the present invention is selected from a silane compound of the following formula: 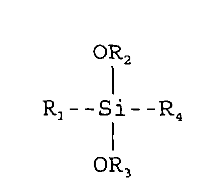 wherein R1 and R4 are both an alkyl or cycloalkyl group containing a primary, secondary or tertiary carbon atom attached to the silicon, R1 and R4 being the same or different; R2 and R3 are alkyl or aryl groups. R1 may be methyl, isopropyl, cyclopentyl, cyclohexyl or t-butyl; R2 and R3 may be methyl, ethyl, propyl, or butyl groups and not necessarily the same; and R4 may also methyl, isopropyl, cyclopentyl, cyclohexyl or t-butyl. Specific external donors are cyclohexylmethydimethoxy silane (CMDS), diisopropyldimethoxysilane (DIDS) cyclohexylisopropyl dimethoxysilane (CIDS), dicyclopentyldimethoxysilane (CPDS) or di-t-butyl dimethoxysilane (DTDS).

Polyethylene produced using the above described catalyst will have an MWD (MW/MD) of at least 4.0, preferably at least 5.0, more preferably at least 6.0, and even more preferably at least 7.0.

### EXAMPLES

The invention having been generally described, the following examples are provided merely to illustrate certain embodiments of the invention. It is understood that the examples are given by way of illustration and are not intended to limit the specification or the claims to follow in any manner.

### Catalyst Preparation

This example provides an illustration of a controlled-morphology polyethylene catalyst that allows for fine tuning of the intrinsic molecular weight distribution (MWD) of the polymer given by the catalyst. Control of the MWD allows a variety of polymer grades - with applications ranging from injection molding (narrow MWD) to blown films (broad MWD) - to be produced with a single catalyst system.

The catalyst was made as follows:

### Step 1.

BuEtMg/DIAE/TEAI (1:0.6:0.03)+ 2-Ethylhexanol (2.09) to provide soluble intermediate A.

### Step 2.

Intermediate + 1.0 CITi(OPr)₃ to provide soluble intermediate B.

### Step 3.

Intermediate B + Ti(OBu)4/TiCI4 (2.0:1.0) to provide solid precatalyst.

### Step 4.

Precatalyst + TiCI4 (0.25)+ TEAI provide the final catalyst.

### Step 5.

The final catalyst was then subjected to heating at 90°C for times as shown in Table 1 below.

### Polymerization

The reactor (autoclave Engineer) used for the polymerization of ethylene has a four liter capacity and is fitted with four mixing baffles with two opposed pitch mixing propellers. Ethylene and hydrogen are introduced to the reactor vessel via Teledyne-Hastings Raydist mass flow controllers while a dome loaded back-pressure regulator keeps the internal reaction pressure constant. The reaction temperature is maintained (in the reactor jacket) by steam and cold water using a Kammer Valve linked to a Barber-Coleman Controller. Hexane was used as diluent.

| Experimental variables: | |
|---|---|
| Temperature | 80°C |
| Reaction time | 60 min |
| Pressure | (125psi) 8.62 10³ Pa |
| Catalyst | 0.2 cc slurry (ca. 10mg catalyst) |
| Cocalyst | TEAL @ 0.25 mmole/L |
| Flow rates | H₂/C₂ @ 0.25 |

**Table 1:**

| Time (h, 90 °C) | cocat | SR5 | M_{w}/Mₙ |
|---|---|---|---|
| 0 (control) | TEAl | 10.4 | 5.4 |
| 2 | TEAl | 11.1 | 6.7 |
| 4 | TEAl | 11.7 | 6.8 |
| 6 | TEAl | 12.5 | 6.4 |
| 24 | TEAl | 12.8 | 6.8 |

The catalyst solution was sampled at 2, 4, 6, and 24 hours. Heat treatment at this stage significantly broadens the intrinsic MWD of the as shown by the SR5 and GPC data presented in Table 1 and Figure 1 (TEAI cocatalyst). Here it can be seen that the MWD increases steadily through the first six hours of heating. After this point, the broadening levels out. Moreover, the data indicates that the molecular weight distribution of the catalyst can potentially be fine-tuned to a desired value based on the polymer application. Finally, no loss in the high activity or excellent fluff morphology given by this catalyst was seen upon heat treatment.

## Claims

1. A polyolefin catalyst produced by a process comprising:
a) contacting a soluble magnesium dialkoxide compound of the general formula Mg(OR'')₂ with a halogenating agent capable of exchanging one halogen for one alkoxide to form a reaction product A, where R'' is a hydrocarbyl or substituted hydrocarbyl having from 1 to 20 carbon atoms;
b) contacting reaction product A with a first halogenating/titanating agent to form reaction product B;
c) contacting reaction product B with a second stronger halogenating/titanating agent to form reaction product C;
d) contacting reaction product C with an organoaluminum preactivating agent to form a preactivated catalyst; and
e) heating the preactivated catalyst at a temperature in the range of 90°C to 150°C, for a time in the range of thirty minutes to a twenty-four hours.

2. The catalyst of claim 1 wherein the soluble magnesium dialkoxide compound is a reaction product of a reaction comprising an alkyl magnesium compound of the general formula MgRR', wherein R and R' are alkyl groups of 1-10 carbon atoms and may be the same or different, and an alcohol of the general formula R''OH wherein the alcohol is linear or branched and wherein R" is an alkyl group of 4-20 carbon atoms.

3. The catalyst of claim 2 wherein the soluble magnesium compound is a magnesium di(2-ethylhexoxide).

4. The catalyst of claim 2 wherein the alkyl magnesium compound is diethyl magnesium, dipropyl magnesium, dibutyl magnesium or butylethylmagnesium.

5. The catalyst of claim 2 wherein the alcohol is ethanol, propanol, isopropanol, butanol, isobutanol or 2-ethylhexanol.

6. The catalyst of claim 2 wherein the reaction further comprises an aluminum alkyl.

7. The catalyst of claim 6 wherein the aluminum alkyl is triethylaluminum.

8. The catalyst of claim 7 wherein the ratio of alkyl aluminum to magnesium is 0.001:1 to 1:1.

9. The catalyst of claim 1 wherein the catalyst provides for large polymer particles with a uniform distribution of sizes with low levels of particles of less than 125 microns.

10. The catalyst of claim 2 wherein the reaction further comprises an electron donor.

11. The catalyst of claim 10 wherein the ratio of electron donor to magnesium is in the range of 0:1 to 10:1.

12. The catalyst of claim 11 wherein the electron donor is an ether.

13. The catalyst of claim 1 wherein the halogenating agent is of the general formula ClAR'''ₓ, wherein A is a nonreducing oxyphilic compound, R''' is a hydrocarbyl moiety having from 2 to 6 carbon atoms, and x is the valence of A minus 1.

14. The catalyst of claim 1 wherein the first mild chlorinating/titanating agent is a blend of two tetra-substituted titanium compounds with all four substituents being the same and the substituents being a halide or an alkoxide or phenoxide with 2 to 10 carbon atoms.

15. The catalyst of claim 14 wherein the first mild chlorinating /titanating agent is a blend of a titanium halide and a organic titanate.

16. The catalyst of claim 15 wherein the first mild chlorinating /titanating agent is a blend of TiCl₄ and Ti(OBu)₄ in a range from 0.5:1 to 6:1 TiCl₄/TiOBu)₄.

17. The catalyst of claim 1 wherein step b) further comprises an electron donor of the general formula RSi(OR')₃, wherein R and R' are alkyls with 1-5 carbon atoms and may be the same or different.

18. The catalyst of claim 17 wherein the electron donor is methylsilyltriethoxide.

19. The catalyst of claim 1 wherein the second stronger chlorinating/titanating agent is a titanium halide.

20. The catalyst of claim 19 wherein the second stronger chlorinating/titanating agent is titanium tetrachloride, and wherein the range of titanium to magnesium is 0:1 to 2:1.

21. The catalyst of claim 1 wherein the organoaluminum preactivating agent is an aluminum alkyl of the formula AlR^₃ where R^ is an alkyl having 1-8 carbon atoms or a halide, R^ being the same or different and at least one R^ is an alkyl.

22. The catalyst of claim 21 wherein the organoaluminum preactivating agent is a trialkyl aluminum.

23. The catalyst of claim 22 wherein the ratio of aluminum to titanium is in the range from 0.01:1 to 2:1.

24. A polymer produced by a process comprising: A process for making a catalyst, the process comprising:
a) contacting a soluble magnesium dialkoxide compound of the general formula Mg(OR")₂ with a halogenating agent capable of exchanging one halogen for one alkoxide to form reaction product A, where R" is a hydrocarbyl or substituted hydrocarbyl having from 1 to 20 carbon atoms;
b) contacting reaction product A with a first halogenating/titanating agent to form reaction product B;
c) contacting reaction product B with a second stronger halogenating/titanating agent to form reaction product C;
d) contacting reaction product C with an organoaluminum preactivating agent to form a preactivated catalyst; and
e) heating the preactivated catalyst at a temperature in the range of 90°C to 150°C, for a time in the range of thirty minutes to twenty-four hours.

25. The process of claim 24 wherein the soluble magnesium dialkoxide compound is a reaction product uf a reaction comprising an alkyl magnesium compound of the general formula MgRR', wherein R and R' are alkyl groups of 1-10 carbon atoms and may be the same or different, and an alcohol of the general formula R''OH wherein the alcohol is linear or branched and wherein R'' is an alkyl group of 4-20 carbon atoms.

26. The process of claim 24 wherein the soluble magnesium compound is a magnesium di(2-ethylhexoxide).

27. The process of claim 25 wherein the alkyl magnesium compound is diethyl magnesium, dipropyl magnesium, dibutyl magnesium or butylethylmagnesium.

28. The process of claim 25 wherein the alcohol is ethanol, propanol, isopropanol, butanol, isobutanol or 2-ethylhexanol.

29. The process of claim 25 wherein the reaction further comprises an aluminum alkyl.

30. The process of claim 29 wherein the aluminum alkyl is triethylaluminum.

31. The process of claim 30 wherein the ratio of alkyl aluminum to magnesium is 0.001:1 to 1:1.

32. The process of claim 24 wherein the catalyst provides for larger polymer particles with a uniform distribution of sizes with low levels of particles of less than 125 microns.

33. The process of claim 25 wherein the reaction further comprises an electron donor.

34. The process of claim 33 wherein the ratio of electron donor to magnesium is in the range of 0:1 to 10:1.

35. The process of claim 24 wherein the halogenating agent is of the general formula ClAR'''ₓ, wherein A is a nonreducing oxyphilic compound, R''' is a hydrocarbyl moiety having from about 2 to 6 carbon atoms, and x is the valence of A minus 1.

36. The process of claim 35 herein the halogenating agent is ClTi(OⁱPr)₃.

37. The process of claim 36 wherein the ratio of titanium to magnesium is between 0.5 and 5.0.

38. The process of claim 24 wherein the first mild chlorinating/titanating agent is a blend of two tetra-substituted titanium compounds with all four substituents being the same and the substituents being a halide or an alkoxide or phenoxide with 2 to 10 carbon atoms.

39. The process of claim 38 wherein the first mild chlorinating /titanating agent is a blend of a titanium halide and a organic titanate.

40. The process of claim 38 wherein the first mild chlorinating /titanating agent is a blend of TiCl₄ and Ti(OBu)₄ in a range from 0.5:1 to 6:1 TiCl₄/TiOBu)₄.

41. The process of claim 24 wherein the reaction of step a) further comprises an electron donor.

42. The process of claim 24 wherein the second stronger chlorinating/titanating agent is a titanium halide.

43. The process of claim 42 wherein the second stronger chlorinating/titanating agent is titanium tetrachloride, and wherein the range of titanium to magnesium is 0:1 to 2:1.

44. The process of claim 43 wherein titanium tetrachloride is present in the range of 0.1 to 5.0 equivalents.

45. The process of claim 24 wherein the organoaluminum preactivating agent is an aluminum alkyl of the formula AlR^₃ where R^ is an alkyl having 1-8 carbon atoms or a halide, R^ being the same or different and at least one R^ is an alkyl.

46. The process of claim 45 wherein the organoaluminum preactivating agent is a trialkyl aluminum.

47. The process of claim 46 ratio of aluminum to titanium is in the range from 0.01:1 to 2:1.

48. The process of claim 47 wherein the organoaluminum preactivating agent is TEAl.

49. The process of claim 24 wherein an electron donor is present in any one of steps a), b), c) d) or e), and wherein the ratio of electron donor to magnesium is in the range of 0:1 to 10:1.

50. The process of claim 24 wherein the catalyst is useful in making polethylene of a desired molecular weight distribution.

51. A process for α-olefin polymerization, comprising:
a) contacting one or more α-olefin monomers together in the presence of a catalyst under polymerization conditions,
wherein the catalyst was produced by:
i) contacting a soluble magnesium dialkoxide compound of the general formula Mg(OR'')₂ with a halogenating agent capable of exchanging one halogen for one alkoxide to form a reaction product A, where R" is a hydrocarbyl or substituted hydrocarbyl having from 1 to 20 carbon atoms;
ii) contacting reaction product A with a first halogenating/titanating agent to form reaction product B;
iii) contacting reaction product B with a second stronger halogenating/titanating agent to form reaction product C;
iv) contacting reaction product C with an organoaluminum preactivating agent to form a preactivated catalyst; and
v) heating the preactivated catalyst at a temperature in the range of 90°C to 150°C, for a time in the range of thirty minutes to twenty-four hours.

52. The process of claim 51 further comprising:
b) extracting polyolefin polymer.

53. The process of claim 51 wherein the monomers are ethylene monomers and the polymer is polyethylene.

54. The process of claim 53 wherein the polyethylene has a molecular weight distribution of at least about 4.U.

55. The process of claim 51 wherein the polymerization is in bulk, slurry or gas phase.

56. The process of claim 51 wherein the halogenating agent is of the general formula ClAR'''ₓ, wherein A is a nonreducing oxyphilic compound, and R''' is a hydrocarbyl moiety having from about 2 to 6 carbon atoms, and X is the valence of A minus 1.

57. The process of claim 56 wherein the halogenating agent is ClTi(OiPr)₃.

58. The process of claim 51 wherein the first halogenating/titanating agent is a blend of two tetre-substituted titanium compounds having the general formula TiCl₄/Ti(OR'''')₄, wherein R''''₄ is a hydrocarbyl moiety having 2 to 6 carbon atoms.

59. The process of claim 58 wherein the first halogenating/titanating agent is a blend of TiCl₄/Ti(OBu)₄, and wherein the ratio of TiCl₄ to Ti(OBu)₄ is in the range of 0.5:1 to 6:1.

60. The process of claim 59 wherein the ratio of titanium to magnesium present in step (ii) is between 0.5 and 5.0.

61. The process of claim 51 wherein the second stronger halogenating/titanating agent is TiCl₄.

62. The process of claim 61 wherein TiCl₄ is present in the range of 0.1 to 5.0 equivalents.

63. The process of claim 51 wherein the organoaluminum preactivating agent is TEA1.

64. The process of claim 51 wherein an electron donor is present in any one of steps i-v, and wherein the ratio of electron donor to magnesium is in the range of 0:1 to 10:1.

## Patentansprüche

1. Polyolefinkatalysator, produziert durch ein Verfahren, umfassend :
a) Inkontaktbringen einer löslichen Magnesiumdialkoxidverbindung der allgemeinen Formel Mg(OR'')₂ mit einem Halogeniermittel, das fähig ist, ein Halogen gegen ein Alkoxid auszutauschen, um ein Reaktionsprodukt A zu bilden, wobei R" ein Kohlenwasserstoffrest oder substituierter Kohlenwasserstoffrest mit 1 bis 20 Kohlenstoffatomen ist ;
b) Inkontaktbringen von Reaktionsprodukt A mit einem ersten Halogenier-/Titaniermittel zur Bildung von Reaktionsprodukt B ;
c) Inkontaktbringen von Reaktionsprodukt B mit einem zweiten, stärkeren Halogenier-/Titaniermittel zur Bildung von Reaktionsprodukt C ;
d) Inkontaktbringen von Reaktionsprodukt C mit einem Organoaluminium-Voraktivator zur Bildung eines voraktivierten Katalysators ; und
e) Erhitzen des voraktivierten Katalysators auf eine Temperatur im Bereich von 90 °C bis 150 °C, für eine Zeit im Bereich von dreißig Minuten bis vierundzwanzig Stunden.

2. Katalysator nach Anspruch 1, wobei die lösliche Magnesiumdialkoxidverbindung ein Reaktionsprodukt einer Reaktion ist, die eine Alkylmagnesiumverbindung der allgemeinen Formel MgRR', wobei R und R' Alkylgruppen von 1-10 Kohlenstoffatomen sind und die gleichen oder verschieden sein können, und einen Alkohol der allgemeinen Formel R''OH umfasst, wobei der Alkohol linear oder verzweigt ist und wobei R'' eine Alkylgruppe von 4-20 Kohlenstoffatomen ist.

3. Katalysator nach Anspruch 2, wobei die lösliche Magnesiumverbindung ein Magnesium-di(2-ethylhexoxid) ist.

4. Katalysator nach Anspruch 2, wobei die Alkylmagnesiumverbindung Diethylmagnesium, Dipropylmagnesium, Dibutylmagnesium oder Butylethylmagnesium ist.

5. Katalysator nach Anspruch 2, wobei der Alkohol Ethanol, Propanol, Isopropanol, Butanol, Isobutanol oder 2-Ethylhexanol ist.

6. Katalysator nach Anspruch 2, wobei die Reaktion weiter ein Aluminiumalkyl umfasst.

7. Katalysator nach Anspruch 6, wobei das Aluminiumalkyl Triethylaluminium ist.

8. Katalysator nach Anspruch 7, wobei das Verhältnis von Alkylaluminium zu Magnesium 0,001 : 1 bis 1 : 1 beträgt.

9. Katalysator nach Anspruch 1, wobei der Katalysator große Polymerpartikel mit einer gleichförmigen Größenverteilung mit niedrigen Gehalten von Partikeln von weniger als 125 Mikron bereitstellt.

10. Katalysator nach Anspruch 2, wobei die Reaktion weiter einen Elektronendonator umfasst.

11. Katalysator nach Anspruch 10, wobei das Verhältnis von Elektronendonator zu Magnesium im Bereich von 0 : 1 bis 10 : 1 liegt.

12. Katalysator nach Anspruch 11, wobei der Elektronendonator ein Ether ist.

13. Katalysator nach Anspruch 1, wobei das Halogeniermittel die allgemeine Formel ClAR'''ₓ aufweist, wobei A eine nichtreduzierende oxyphile Verbindung ist, R''' ein Kohlenwasserstoffrestanteil mit 2 bis 6 Kohlenstoffatomen ist und x die Valenz von A minus 1 ist.

14. Katalysator nach Anspruch 1, wobei das erste milde Chlorier-/Titaniermittel ein Gemisch zweier tetrasubstituierter Titanverbindungen ist, wobei alle vier Substituenten die gleichen sind und die Substituenten ein Halid oder ein Alkoxid oder Phenoxid mit 2 bis 10 Kohlenstoffatomen sind.

15. Katalysator nach Anspruch 14, wobei das erste milde Chlorier-/Titaniermittel ein Gemisch eines Titanhalids und eines organischen Titanats ist.

16. Katalysator nach Anspruch 15, wobei das erste milde Chlorier-/Titaniermittel ein Gemisch von TiCl₄ und Ti(OBu)₄ in einem Bereich von 0,5 : 1 bis 6 : 1 TiCl₄/Ti(OBu)₄ ist.

17. Katalysator nach Anspruch 1, wobei Schritt b) weiter einen Elektronendonator der allgemeinen Formel RSi(OR')₃ umfasst, wobei R und R' Alkyle mit 1-5 Kohlenstoffatomen sind und das gleiche oder verschieden sein können.

18. Katalysator nach Anspruch 17, wobei der Elektronendonator Methylsilyltriethoxid ist.

19. Katalysator nach Anspruch 1, wobei das zweite, stärkere Chlorier-/Titaniermittel ein Titanhalid ist.

20. Katalysator nach Anspruch 19, wobei das zweite, stärkere Chlorier-/Titaniermittel Titantetrachlorid ist und wobei der Bereich von Titan zu Magnesium 0 : 1 bis 2 : 1 beträgt.

21. Katalysator nach Anspruch 1, wobei der Organoaluminium-Voraktivator ein Aluminiumalkyl der Formel AlR^₃ ist, wobei R^ ein Alkyl mit 1-8 Kohlenstoffatomen oder ein Halid ist, wobei R^ das gleiche oder verschieden ist und mindestens ein R^ ein Alkyl ist.

22. Katalysator nach Anspruch 21, wobei der Organoaluminium-Voraktivator ein Trialkylaluminium ist.

23. Katalysator nach Anspruch 22, wobei das Verhältnis von Aluminium zu Titan im Bereich von 0,01 : 1 bis 2 : 1 liegt.

24. Verfahren zur Herstellung eines Katalysators, wobei das Verfahren umfasst :
a) Inkontaktbringen einer löslichen Magnesiumdialkoxidverbindung der allgemeinen Formel Mg(OR'')₂ mit einem Halogeniermittel, das fähig ist, ein Halogen gegen ein Alkoxid auszutauschen, um ein Reaktionsprodukt A zu bilden, wobei R" ein Kohlenwasserstoffrest oder substituierter Kohlenwasserstoffrest mit 1 bis 20 Kohlenstoffatomen ist ;
b) Inkontaktbringen von Reaktionsprodukt A mit einem ersten Halogenier-/Titaniermittel zur Bildung von Reaktionsprodukt B ;
c) Inkontaktbringen von Reaktionsprodukt B mit einem zweiten, stärkeren Halogenier-/Titaniermittel, um das Reaktionsprodukt C zu bilden ;
d) Inkontaktbringen von Reaktionsprodukt C mit einem Organoaluminium-Voraktivator zur Bildung eines voraktivierten Katalysators ; und
e) Erhitzen des voraktivierten Katalysators auf eine Temperatur im Bereich von 90 °C bis 150 °C, für eine Zeit im Bereich von dreißig Minuten bis vierundzwanzig Stunden.

25. Verfahren nach Anspruch 24, wobei die lösliche Magnesiumdialkoxidverbindung ein Reaktionsprodukt einer Reaktion ist, die eine Alkylmagnesiumverbindung der allgemeinen Formel MgRR', wobei R und R' Alkylgruppen von 1-10 Kohlenstoffatomen sind und die gleichen oder verschieden sein können, und einen Alkohol der allgemeinen Formel R''OH, wobei der Alkohol linear oder verzweigt ist und wobei R'' eine Alkylgruppe von 4-20 Kohlenstoffatomen ist, umfasst.

26. Verfahren nach Anspruch 24, wobei die lösliche Magnesiumverbindung ein Magnesium-di(2-ethylhexoxid) ist.

27. Verfahren nach Anspruch 25, wobei die Alkylmagnesiumverbindung Diethylmagnesium, Dipropylmagnesium, Dibutylmagnesium oder Butylethylmagnesium ist.

28. Verfahren nach Anspruch 25, wobei der Alkohol Ethanol, Propanol, Isopropanol, Butanol, Isobutanol oder 2-Ethylhexanol ist.

29. Verfahren nach Anspruch 25, wobei die Reaktion weiter ein Aluminiumalkyl umfasst.

30. Verfahren nach Anspruch 29, wobei das Aluminiumalkyl Triethylaluminium ist.

31. Verfahren nach Anspruch 30, wobei das Verhältnis von Alkylaluminium zu Magnesium 0,001 : 1 bis 1 : 1 beträgt.

32. Verfahren nach Anspruch 24, wobei der Katalysator große Polymerpartikel mit einer gleichförmigen Größenverteilung mit niedrigen Gehalten von Partikeln von weniger als 125 Mikron bereitstellt.

33. Verfahren nach Anspruch 25, wobei die Reaktion weiter einen Elektronendonator umfasst.

34. Verfahren nach Anspruch 33, wobei das Verhältnis von Elektronendonator zu Magnesium im Bereich von 0 : 1 bis 10 : 1 liegt.

35. Verfahren nach Anspruch 24, wobei das Halogeniermittel die allgemeine Formel ClAR'''ₓ aufweist, wobei A eine nichtreduzierende oxyphile Verbindung ist, R"' ein Kohlenwasserstoffrestanteil mit 2 bis 6 Kohlenstoffatomen ist und x die Valenz von A minus 1 ist.

36. Verfahren nach Anspruch 35, wobei das Halogeniermittel ClTi(OⁱPr)₃ ist.

37. Verfahren nach Anspruch 36, wobei das Verhältnis von Titan zu Magnesium zwischen 0,5 und 5,0 beträgt.

38. Verfahren nach Anspruch 24, wobei das erste milde Chlorier-/Titaniermittel ein Gemisch zweier tetrasubstituierter Titanverbindungen ist, wobei alle vier Substituenten die gleichen sind und die Substituenten ein Halid oder ein Alkoxid oder Phenoxid mit 2 bis 10 Kohlenstoffatomen sind.

39. Verfahren nach Anspruch 38, wobei das erste milde Chlorier-/Titaniermittel ein Gemisch eines Titanhalids und eines organischen Titanats ist.

40. Verfahren nach Anspruch 38, wobei das erste milde Chlorier-/Titaniermittel ein Gemisch von TiCl₄ und Ti(OBu)₄ in einem Bereich von 0,5 : 1 bis 6 : 1 Ticl₄/Ti(OBu)₄ ist.

41. Verfahren nach Anspruch 24, wobei die Reaktion von Schritt a) weiter einen Elektronendonator umfasst.

42. Verfahren nach Anspruch 24, wobei das zweite, stärkere Chlorier-/Titaniermittel ein Titanhalid ist.

43. Verfahren nach Anspruch 42, wobei das zweite, stärkere Chlorier-/Titaniermittel Titantetrachlorid ist und wobei der Bereich von Titan zu Magnesium 0 : 1 bis 2 : 1 beträgt.

44. Verfahren nach Anspruch 43, wobei Titantetrachlorid im Bereich von 0,1 bis 5,0 Äquivalente vorhanden ist.

45. Verfahren nach Anspruch 24, wobei der Organoaluminium-Voraktivator ein Aluminiumalkyl der Formel AlR^₃ ist, wobei R^ ein Alkyl mit 1-8 Kohlenstoffatomen oder ein Halid ist, wobei R^ das gleiche oder verschieden ist und mindestens ein R^ ein Alkyl ist.

46. Verfahren nach Anspruch 45, wobei der Organoaluminium-Voraktivator ein Trialkylaluminium ist.

47. Verfahren nach Anspruch 46, wobei das Verhältnis von Aluminium zu Titan im Bereich von 0,01 : 1 bis 2 : 1 liegt.

48. Verfahren nach Anspruch 47, wobei der Organoaluminium-Voraktivator TEAl ist.

49. Verfahren nach Anspruch 24, wobei ein Elektronendonator in gleich welchem der Schritte a), b), c), d) oder e) vorhanden ist und wobei das Verhältnis von Elektronendonator zu Magnesium im Bereich von 0 : 1 bis 10 : 1 liegt.

50. Verfahren nach Anspruch 24, wobei der Katalysator bei der Herstellung von Polyethylen einer gewünschten Molmassenverteilung gebrauchsgeeignet ist.

51. Verfahren zur α-Olefinpolymerisation, umfassend :
a) miteinander Inkontaktbringen eines oder mehrerer α-Olefinmonomere in Gegenwart eines Katalysators unter Polymerisationsbedingungen,
wobei der Katalysator produziert wurde durch :
i) Inkontaktbringen einer löslichen Magnesiumdialkoxidverbindung der allgemeinen Formel Mg(Or'')₂ mit einem Halogeniermittel, das fähig ist, ein Halogen gegen ein Alkoxid auszutauschen, um ein Reaktionsprodukt A zu bilden, wobei R" ein Kohlenwasserstoffrest oder substituierter Kohlenwasserstoffrest mit 1 bis 20 Kohlenstoffatomen ist ;
ii) Inkontaktbringen von Reaktionsprodukt A mit einem ersten Halogenier-/Titaniermittel zur Bildung von Reaktionsprodukt B ;
iii) Inkontaktbringen von Reaktionsprodukt B mit einem zweiten, stärkeren Halogenier-/Titaniermittel zur Bildung von Reaktionsprodukt C ;
iv) Inkontaktbringen von Reaktionsprodukt C mit einem Organoaluminium-Voraktivator zur Bildung eines voraktivierten Katalysators ; und
v) Erhitzen des voraktivierten Katalysators auf eine Temperatur im Bereich von 90 °C bis 150 °C, für eine Zeit im Bereich von dreißig Minuten bis vierundzwanzig Stunden.

52. Verfahren nach Anspruch 51, weiter umfassend :
b) Extrahieren von Polyolefinpolymer.

53. Verfahren nach Anspruch 51, wobei die Monomere Ethylenmonomere sind und das Polymer Polyethylen ist.

54. Verfahren nach Anspruch 53, wobei das Polyethylen eine Molmassenverteilung von mindestens etwa 4,0 hat.

55. Verfahren nach Anspruch 51, wobei die Polymerisation Massen-, Suspensions- oder Gasphasenpolymerisation ist.

56. Verfahren nach Anspruch 51, wobei das Halogeniermittel die allgemeine Formel ClAR'''ₓ aufweist, wobei A eine nichtreduzierende oxyphile Verbindung ist und R''' ein Kohlenwasserstoffrestanteil mit 2 bis 6 Kohlenstoffatomen ist und x die Valenz von A minus 1 ist.

57. Verfahren nach Anspruch 56, wobei das Halogeniermittel ClTi(OiPr)₃ ist.

58. Verfahren nach Anspruch 51, wobei das erste Halogenier-/Titaniermittel ein Gemisch zweier tetrasubstituierter Titanverbindungen mit der allgemeinen Formel TiCl₄/Ti(OR"")₄ ist, wobei R''''₄ ein Kohlenwasserstoffrestanteil mit 2 bis 6 Kohlenstoff-atomen ist.

59. Verfahren nach Anspruch 58, wobei das erste Halogenier-/Titaniermittel ein Gemisch von TiCl₄/Ti(OBu)₄ ist und wobei das Verhältnis von TiCl₄ zu Ti(OBu)₄ im Bereich von 0,5 : 1 bis 6 : 1 liegt.

60. Verfahren nach Anspruch 59, wobei das Verhältnis von in Schritt (ii) vorhandenem Titan zu Magnesium zwischen 0,5 und 5,0 beträgt.

61. Verfahren nach Anspruch 51, wobei das zweite, stärkere Halogenier-/Titaniermittel TiCl₄ ist.

62. Verfahren nach Anspruch 61, wobei TiCl₄ im Bereich von 0,1 bis 5,0 Äquivalenten vorhanden ist.

63. Verfahren nach Anspruch 51, wobei der Organoaluminium-Voraktivator TEAl ist.

64. Verfahren nach Anspruch 51, wobei ein Elektronendonator in gleich welchem der Schritte i-v vorhanden ist und wobei das Verhältnis von Elektronendonator zu Magnesium im Bereich von 0 : 1 bis 10 : 1 liegt.

## Revendications

1. Catalyseur de polyoléfine que l'on obtient via un procédé comprenant le fait de :
a) mettre un composé de dialcoxyde de magnésium soluble répondant à la formule générale Mg(OR'')₂ en contact avec un agent d'halogénation capable d'échanger un atome d'halogène pour un groupe alcoxyde afin d'obtenir un produit réactionnel A, R" représentant un groupe hydrocarbyle ou un groupe hydrocarbyle substitué contenant de 1 à 20 atomes de carbone ;
b) mettre le produit réactionnel A en contact avec un premier agent d'halogénation/titanation pour obtenir le produit réactionnel B ; et
c) mettre le produit réactionnel B en contact avec un deuxième agent d'halogénation/titanation pour obtenir le produit réactionnel C ;
d) mettre le produit réactionnel C en contact avec un agent de préactivation à base d'organoaluminium pour obtenir un catalyseur préactivé ; et
e) chauffer le catalyseur préactivé à une température dans la plage de 90 °C à 150 °C pendant un laps de temps dans la plage de 30 minutes à 24 heures.

2. Catalyseur selon la revendication 1, dans lequel le composé de dialcoxyde de magnésium soluble est un produit réactionnel d'une réaction comprenant un composé d'alkyl magnésium répondant à la formule générale MgRR' dans laquelle R et R' représentent des groupes alkyle contenant de 1 à 10 atomes de carbone et peuvent être identiques ou différents, et un alcool répondant à la formule générale R''OH, l'alcool étant un alcool linéaire ou ramifié et R'' représentant un groupe alkyle contenant de 4 à 20 atomes de carbone.

3. Catalyseur selon la revendication 2, dans lequel le composé de magnésium soluble est un di(2-éthylhexoxyde) de magnésium.

4. Catalyseur selon la revendication 2, dans lequel le composé d'alkyl magnésium est le diéthyl magnésium, le dipropyl magnésium, le dibutyl magnésium ou le butylméthyl magnésium.

5. Catalyseur selon la revendication 2, dans lequel l'alcool est l'éthanol, le propanol, l'isopropanol, le butanol, l'isobutanol ou le 2-éthylhexanol.

6. Catalyseur selon la revendication 2, dans lequel le produit réactionnel comprend en outre un alkyl aluminium.

7. Catalyseur selon la revendication 6, dans lequel l'alkyl aluminium est le triéthylaluminium.

8. Catalyseur selon la revendication 7, dans lequel le rapport de l'alkyl aluminium au magnésium s'élève de 0,001 : 1 à 1 : 1.

9. Catalyseur selon la revendication 1, dans lequel le catalyseur procure de grosses particules polymères possédant une distribution granulométrique uniforme avec de faibles teneurs en particules inférieures à 125 microns.

10. Catalyseur selon la revendication 2, dans lequel le produit réactionnel comprend en outre un donneur d'électrons.

11. Catalyseur selon la revendication 10, dans lequel le rapport du donneur d'électrons au magnésium se situe dans la plage d'environ 0 : 1 à environ 10 : 1.

12. Catalyseur selon la revendication 11, dans lequel le donneur d'électrons est un éther.

13. Catalyseur selon la revendication 1, dans lequel l'agent d'halogénation répond à la formule générale ClAR''ₓ, dans laquelle A représente un composé oxyphile non réducteur, R'''ₓ représente une fraction hydrocarbyle contenant d'environ 2 à 6 atomes de carbone et x représente la valence de A moins 1.

14. Catalyseur selon la revendication 1, dans lequel le premier agent doux de chloration/titanation est un mélange de deux composés de titane tétrasubstitués, les quatre substituants étant identiques et les substituants représentant un halogénure ou un alcoxyde ou un phénoxyde contenant de 2 à 10 atomes de carbone.

15. Catalyseur selon la revendication 14, dans lequel le premier agent doux de chloration/titanation est un mélange d'un halogénure de titane et d'un titanate organique.

16. Catalyseur selon la revendication 14, dans lequel le premier agent doux de chloration/titanation est un mélange de tétrachlorure de titane et de Ti(OBu)₄ dans la plage de 0,5 : 1 à 6 : 1 de TiCl₄/Ti(OBu)₄.

17. Catalyseur selon la revendication 1, dans lequel le produit réactionnel de l'étape b) comprend en outre un donneur d'électrons répondant à la formule générale RSi(OR')₃, R et R' représentant des groupes alkyle contenant de 1 à 5 atomes de carbone, et pouvant être identiques ou différents.

18. Catalyseur selon la revendication 17, dans lequel le donneur d'électrons est un triéthoxyde de méthylsilyle.

19. Catalyseur selon la revendication 1, dans lequel le deuxième agent de chloration/titanation plus fort est un halogénure de titane.

20. Catalyseur selon la revendication 19, dans lequel le deuxième agent de chloration/titanation plus fort et le tétrachlorure de titane et dans lequel le rapport du titane au magnésium se situe dans la plage de 0 : 1 à 2 : 1.

21. Catalyseur selon la revendication 1, dans lequel l'agent de préactivation à base d'organoaluminium est un alkyl aluminium répondant à la formule AlR^₃ où R^ représente un groupe alkyle contenant de 1 à 8 atomes de carbone ou un halogénure, les radicaux R^ étant identiques ou différents et au moins un radical R^ représentant un groupe alkyle.

22. Catalyseur selon la revendication 21, dans lequel l'agent de préactivation à base d'organoaluminium est un trialkyl aluminium.

23. Catalyseur selon la revendication 22, dans lequel le rapport de l'aluminium au titane se situe dans la plage de 0,1 : 1 à 2 : 1.

24. Procédé pour préparer un catalyseur, le procédé comprenant le fait de :
a) mettre un composé de dialcoxyde de magnésium soluble répondant à la formule générale Mg(OR'')₂ en contact avec un agent d'halogénation capable d'échanger un atome d'halogène pour un groupe alcoxyde afin d'obtenir un produit réactionnel A, R" représentant un groupe hydrocarbyle ou un groupe hydrocarbyle substitué contenant de 1 à 20 atomes de carbone ;
b) mettre le produit réactionnel A en contact avec un premier agent d'halogénation/titanation pour obtenir le produit réactionnel B ; et
c) mettre le produit réactionnel B en contact avec un deuxième agent d'halogénation/titanation pour obtenir le produit réactionnel C ;
d) mettre le produit réactionnel C en contact avec un agent de préactivation à base d'organoaluminium pour obtenir un catalyseur préactivé ; et
e) chauffer le catalyseur préactivé à une température dans la plage de 90 °C à 150 °C pendant un laps de temps dans la plage de 30 minutes à 24 heures.

25. Procédé selon la revendication 24, dans lequel le composé de dialcoxyde de magnésium soluble est un produit réactionnel d'une réaction comprenant un composé d'alkyl magnésium répondant à la formule générale MgRR' dans laquelle R et R' représentent des groupes alkyle contenant de 1 à 10 atomes de carbone et peuvent être identiques ou différents, et un alcool répondant à la formule générale R''OH, l'alcool étant un alcool linéaire ou ramifié et R'' représentant un groupe alkyle contenant de 4 à 20 atomes de carbone.

26. Procédé selon la revendication 24, dans lequel le composé de magnésium soluble est un di(2-éthylhexoxyde) de magnésium.

27. Procédé selon la revendication 25, dans lequel le composé d'alkyl magnésium est le diéthyl magnésium, le dipropyl magnésium, le dibutyl magnésium ou le butylméthyl magnésium.

28. Procédé selon la revendication 25, dans lequel l'alcool est l'éthanol, le propanol, l'isopropanol, le butanol, l'isobutanol ou le 2-éthylhexanol.

29. Procédé selon la revendication 25, dans lequel le produit réactionnel comprend en outre un alkyl aluminium.

30. Procédé selon la revendication 29, dans lequel l'alkyl aluminium est le triéthylaluminium.

31. Procédé selon la revendication 30, dans lequel le rapport de l'alkyl aluminium au magnésium s'élève de 0,001 : 1 à 1 : 1.

32. Procédé selon la revendication 24, dans lequel le catalyseur procure de grosses particules polymères possédant une distribution granulométrique uniforme avec de faibles teneurs en particules inférieures à 125 microns.

33. Procédé selon la revendication 25, dans lequel le produit réactionnel comprend en outre un donneur d'électrons.

34. Procédé selon la revendication 33, dans lequel le rapport du donneur d'électrons au magnésium se situe dans la plage d'environ 0 : 1 à environ 10 : 1.

35. Procédé selon la revendication 24, dans lequel l'agent d'halogénation répond à la formule générale ClAR''ₓ, dans laquelle A représente un composé oxyphile non réducteur, R'''ₓ représente une fraction hydrocarbyle contenant d'environ 2 à 6 atomes de carbone et x représente la valence de A moins 1.

36. Procédé selon la revendication 35, dans lequel l'agent d'halogénation est un mélange de TiCl/Ti(OⁱPr)₃.

37. Procédé selon la revendication 36, dans lequel le rapport du titane au magnésium s'élève entre 0,5 et 5,0.

38. Procédé selon la revendication 24, dans lequel le premier agent doux de chloration/titanation est un mélange de deux composés de titane tétrasubstitués, les quatre substituants étant identiques et les substituants représentant un halogénure ou un alcoxyde ou un phénoxyde contenant de 2 à 10 atomes de carbone.

39. Procédé selon la revendication 38, dans lequel le premier agent doux de chloration/titanation est un mélange d'un halogénure de titane et d'un titanate organique.

40. Procédé selon la revendication 38, dans lequel le premier agent doux de chloration/titanation est un mélange de tétrachlorure de titane et de Ti(OBu)₄ dans la plage de 0,5 : 1 à 6 : 1 de TiCl₄/Ti(OBu)₄.

41. Procédé selon la revendication 24, dans lequel le produit réactionnel de l'étape a) comprend en outre un donneur d'électrons.

42. Procédé selon la revendication 24, dans lequel le deuxième agent de chloration/titanation plus fort est un halogénure de titane.

43. Procédé selon la revendication 42, dans lequel le deuxième agent de chloration/titanation plus fort et le tétrachlorure de titane et dans lequel le rapport du titane au magnésium se situe dans la plage de 0 : 1 à 2 : 1.

44. Procédé selon la revendication 43, dans lequel le tétrachlorure de titane est présent dans la plage de 0,1 à 5,0 équivalents.

45. Procédé selon la revendication 24, dans lequel l'agent de préactivation à base d'organoaluminium est un alkyl aluminium répondant à la formule AlR^₃ où R^ représente un groupe alkyle contenant de 1 à 8 atomes de carbone ou un halogénure, les radicaux R^ étant identiques ou différents et au moins un radical R^ représentant un groupe alkyle.

46. Procédé selon la revendication 45, dans lequel l'agent de préactivation à base d'organoaluminium est un trialkyl aluminium.

47. Procédé selon la revendication 46, dans lequel le rapport de l'aluminium au titane se situe dans la plage de 0,1 : 1 à 2 : 1.

48. Procédé selon la revendication 47, dans lequel l'agent de préactivation à base d'organoaluminium est du TEAl.

49. Procédé selon la revendication 24, dans lequel un donneur d'électrons est présent dans l'une quelconque des étapes a), b), c) , d) ou e), et dans lequel le rapport du donneur d'électrons au magnésium se situe dans la plage de 0 : 1 à 10 : 1.

50. Procédé selon la revendication 24, dans lequel le catalyseur est utile pour préparer du polyéthylène possédant une distribution désirée du poids moléculaire.

51. Procédé pour la polymérisation d'une α-oléfine, comprenant le fait de :
a) mettre un ou plusieurs monomères d'α-oléfines en contact les uns avec les autres en présence d'un catalyseur dans des conditions de polymérisation,
le catalyseur étant préparé via un procédé comprenant le fait de :
i) mettre un composé de dialcoxyde de magnésium soluble répondant à la formule générale Mg(OR'')₂ en contact avec un agent d'halogénation capable d'échanger un atome d'halogène pour un groupe alcoxyde afin d'obtenir un produit réactionnel A, R'' représentant un groupe hydrocarbyle ou un groupe hydrocarbyle substitué contenant de 1 à 20 atomes de carbone ;
ii) mettre le produit réactionnel A en contact avec un premier agent d'halogénation/titanation pour obtenir le produit réactionnel B ;
iii) mettre le produit réactionnel B en contact avec un deuxième agent d'halogénation/titanation pour obtenir le produit réactionnel C ;
iv) mettre le produit réactionnel C en contact avec un agent de préactivation à base d'organoaluminium pour obtenir un catalyseur préactivé ; et
v) chauffer le catalyseur préactivé à une température dans la plage de 90 °C à 150 °C pendant un laps de temps dans la plage de 30 minutes à 24 heures.

52. Procédé selon la revendication 51, comprenant en outre le fait de :
b) extraire un polymère de polyoléfine.

53. Procédé selon la revendication 51, dans lequel les monomères sont un monomère d'éthylène et le polymère est un polyéthylène.

54. Procédé selon la revendication 53, dans lequel le polyéthylène possède une distribution du poids moléculaire d'au moins environ 4,0.

55. Procédé selon la revendication 51, dans lequel la polymérisation est une polymérisation mise en oeuvre en masse, en suspension ou en phase gazeuse.

56. Procédé selon la revendication 51, dans lequel l'agent d'halogénation répond à la formule générale ClAR''ₓ, dans laquelle A représente un composé oxyphile non réducteur, R'''ₓ représente une fraction hydrocarbyle contenant d'environ 2 à 6 atomes de carbone et x représente la valence de A moins 1.

57. Procédé selon la revendication 56, dans lequel l'agent d'halogénation est le ClTi(OⁱPr)₃.

58. Procédé selon la revendication 51, dans lequel le premier agent d'halogénation/titanation est un mélange de deux composés de titane tétrasubstitués répondant à la formule générale TiCl₄/Ti(OR'''')₄, où R''''₄ représente une fraction d'hydrocarbyle contenant de 2 à 6 atomes de carbone.

59. Procédé selon la revendication 58, dans lequel le premier agent doux de chloration/titanation est un mélange de TiCl₄/Ti(OBu)₄, et dans lequel le rapport du TiCl₄ et du Ti(OBu)₄ se situe dans la plage de 0,5 : 1 à 6 : 1.

60. Procédé selon la revendication 59, dans lequel le rapport du titane au magnésium présent à l'étape (ii) s'élève entre 0,5 et 5,0.

61. Procédé selon la revendication 51, dans lequel le deuxième agent de chloration/titanation plus fort est du TiCl₄.

62. Procédé selon la revendication 61, dans lequel le tétrachlorure de titane est présent dans la plage de 0,1 à 5,0 équivalents.

63. Procédé selon la revendication 51, dans lequel l'agent de préactivation à base d'organoaluminium est le TEAl.

64. Procédé selon la revendication 51, dans lequel un donneur d'électrons est présent dans l'une quelconque des étapes i-v, et dans lequel le rapport du donneur d'électrons au magnésium se situe de la plage de 0 : 1 à 10 : 1.
